(19) Europäisches Patentamt
European Patent Office
Office européen des brevets

(11) Publication number: **0 059 623**
**A1**

(12) **EUROPEAN PATENT APPLICATION**

(21) Application number: 82301001.2

(22) Date of filing: 26.02.82

(51) Int. Cl.³: G 21 F 9/06
G 21 C 19/30, B 01 J 47/12
C 02 F 1/28

(30) Priority: 27.02.81 JP 27018/81

(43) Date of publication of application: 08.09.82 Bulletin 82/36

(84) Designated Contracting States: DE FR GB SE

(71) Applicant: Hitachi, Ltd.
5-1, Marunouchi 1-chome
Chiyoda-ku Tokyo 100(JP)

(71) Applicant: Hitachi Engineering Co., Ltd.
2-1, Saiwai-cho 3-chome
Hitachi-shi Ibaraki-ken(JP)

(72) Inventor: Matsumoto, Yoshio
1-11-6 Nishinarusawa-cho
Hitachi-shi Ibaraki-ken(JP)

(72) Inventor: Motojima, Kenji
2368-2 Senba-cho
Mito-shi Ibaraki-ken(JP)

(74) Representative: Paget, Hugh Charles Edward et al,
MEWBURN ELLIS & CO. 2/3 Cursitor Street
London EC4A 1BQ(GB)

(54) **A method of purifying liquid using oxine-impregnated activated charcoal and apparatus therefor.**

(57) A liquid is purified, e.g. heavy metal ions are removed, by passing it through oxine-impregnated activated charcoal. To improve the adsorptivity of the charcoal, the liquid passes through an anion exchange material before the completing its passage through the oxine-impregnated activated charcoal. The anion-exchange material has the effect of preventing the lowering of the pH of the liquid which would otherwise reduce adsorptivity.

*FIG. 6*

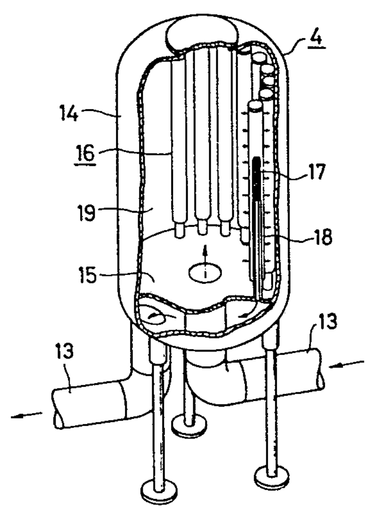


EP 0 059 623 A1

"A method of purifying liquid using oxine-impregnated activated charcoal and apparatus therefor"

The present invention relates to a method of purifying liquid using oxine-impregnated activated charcoal, and to apparatus for carrying out the method.

In a boiling water reactor, the steam generated in the pressure vessel of the reactor is fed to a turbine and is then condensed into cooling water by a condenser. The cooling water fed from the condenser to the pressure vessel is purified in its passage both by a filtering demineralizer which is precoated with a powdered ion exchange resin and by a demineralizer which is charged with a granulated ion exchange resin.

As the filtering demineralizer is washed back at intervals of about two weeks, a large amount of used powdered ion exchange resin, i.e. radioactive waste, is produced. The use of oxine-impregnated activated charcoal, which is prepared by impregnating oxine onto activated charcoal, has been proposed in order to minimize the amount of the radioactive waste and to adsorb the radioactive substances. Oxine-impregnated activated charcoal and its use are described in, for example, Japanese Laid-open patent application No. 54-23093.

It is an object of the present invention to improve the adsorptivity of the oxine-impregnated activated charcoal.

The present invention is set out in the claims.

A general discussion of the invention will now be given, and embodiments of the invention described by way of example, with reference to the accompanying drawings, in which:-

Fig. 1 is a graph showing the relationship between the pH value of sample water and the adsorption ratio of the oxine-impregnated activated charcoal;

Fig. 2 is a graph showing the relationship between the distance from the solution inlet of the adsorptive column and the radioactivity of the adsorptive column;

Fig. 3 is a graph showing the relationship between the lapse of time after feed of the aqueous solution and the concentration of Co and Cl in the effluent;

Fig. 4 is a graph showing the relationship between temperature and the weight and differential heat;

Fig. 5 is a flow chart showing an embodiment of the present invention applied to a boiling water reactor;

Fig. 6 is a view showing the construction of the purifier embodying the present invention shown in Fig. 5; and

Fig. 7 is a sectional view of a portion of the adsorptive layer of the purifier of Fig. 6.

The adsorption of cobalt ions or the like by oxine-impregnated activated charcoal is based upon the production of insoluble metallic oxine chelates in the activated charcoal. When this reaction occurs, the equivalent of hydrogen ions are generated. We have found that the adsorptivity of the oxine-impregnated activated charcoal is highly influenced by the concentration of the hydrogen ions; it deteriorates if the hydrogen ion concentration is increased, i.e. if the pH value is lowered.

Experiments are conducted using aqueous solutions (i.e. sample solutions) containing respectively ions of the heavy metals Cu, Pb, Zn, Cd and Ni. The concentrations of the metal ions in the respective sample solutions are 10 ppm. Also, a buffer solution is added to sample solutions containing the same heavy metal ion to adjust the pH value so as to prepare several sample solutions having different pH values ranging from pH 1 to 12.

100 mg of powdered oxine-impregnated activated charcoal (having a particle diameter of 25 to 38 μm and 74 to 149 μm), which is prepared by impregnating

10% of oxine, is added to 100 ml of the respective sample solutions and is agitated. Then, the concentrations of the heavy metal ions left in the respective sample solutions are measured and the amounts adsorbed by the oxine-impregnated activated charcoal are calculated by subtracting the amounts left in the sample solutions from the total initial amounts of the heavy metal ions in the solutions.

The experimental results are illustrated in Fig. 1 and show that the oxine-impregnated activated charcoal has reduced heavy metal ion adsorptivity if the pH value of the liquid is lowered. More specifically, the charcoal exhibits characteristics which accord with the adsorption equilibrium constants of the respective heavy metal ions, and has its heavy metal ion adsorption remarkably improved if the pH value of the liquid exceeds 4. For instance the adsorptivity of the cobalt (Co) ions is improved to as high as 100% if the pH value exceeds 8.

The pH value of the liquid being treated is shifted to the acid side by the adsorption reactions between the oxine-impregnated activated charcoal and the heavy metal ions. This will be explained taking the adsorption of cobalt chloride as an example. The reactions between the oxine (which is generally expressed

expressed as $HO_x$) impregnated onto the activated charcoal and the cobalt chloride are thought to be:-

$$CoCl_2 + 2HO_x \rightleftarrows Co(O_x)_2 + 2HCl \text{ --------------(1)}$$

and

$$Co(O_x)_2 + HO_x \rightarrow Co(O_x)_3 + HCl \text{ --------------(2).}$$

The cobalt chloride $CoCl_2$ is finally changed to the stable $Co(O_x)_3$. The reaction (1) is reversible and is liable to be especially influenced by the pH value. More specifically, as the adsorption of the Co ions proceeds, the pH value of the liquid is gradually shifted to the acid side. As a result, the reaction rate towards the right in (1) is decreased so that the Co adsorption coefficient of the oxine-impregnated activated charcoal is lowered. This is the condition in Fig. 1 for a low pH value of the liquid being treated.

A variety of experiments conducted by the present inventors have revealed that the shift of the pH value to the acid side by the adsorption reaction between the oxine and the heavy metal ions can be blocked effectively by using, with the oxine, and an OH type anion exchange resin (which is generally expressed as R-OH) coexist. In this case, the reaction (3)

proceeds simultaneously with the reactions (1) and (2):

$$HCl + R\text{-}OH \rightleftarrows R\text{-}Cl + H_2O \quad \text{------------------(3).}$$

On the other hand, the following reaction (4) proceeds if a neutral salt such as sodium chloride coexists:

$$NaCl + R\text{-}OH \rightarrow R\text{-}Cl + Na^+ + OH^- \quad \text{------------(4).}$$

Thus while the adsorption of the heavy metal ions, such as cobalt ions, by the oxine-impregnated activated charcoal proceeds, as a result of the presence of the anion exchange resin the pH value of the liquid being treated can be kept not less than 7 so that the adsorptivity for the ions can be maintained at a high level. The oxine-impregnated activated charcoal traps the heavy metal ions in the form of the chelate of the heavy metal and has a function different from that of a cation exchange resin. As a result, the sodium ions generated in reaction (4) do not disturb the cobalt ion trapping action of the oxine-impregnated activated charcoal. A cation exchange resin adsorbs sodium ions more than cobalt ions. The oxine reacts preferentially with the heavy metal ions such as cobalt ions.

10% of oxine is admixed in the air with granulated activated charcoal having a particle diameter of 149 to 350 μm so that the oxine is impregnated onto the

charcoal. The granulated oxine-impregnated activated charcoal thus prepared is admixed in water with an OH type anion exchange resin having a particle diameter of 125 to 250 μm. The mixing ratio of the resin is 10%. The resultant mixture is held in the form of an adsorptive column having a diameter of 12.3 mm and a length of 150 mm in a glass tube. 500 ml of an aqueous solution containing 30 ppm of cobalt chloride labelled with cobalt-58 is fed at a flow rate of 4 ml/min into the glass tube. Then the adsorptive column is taken out of the glass tube and cut into axial lengths of 10 mm. The radioactivity at each cross section is measured.

The results are illustrated in Fig. 2, in which the three symbols ●, o and x give the radioactivity distributions respectively in the adsorptive column ("the mixed column") prepared as above by admixing 10% oxine-impregnated activated charcoal and an OH type anion exchange resin (10%), in an adsorptive column ("the oxine only column") which is composed solely of the 10% oxine-impregnated activated charcoal, and in an adsorptive column ("the activated charcoal only column") which is composed solely of the actived charcoal. An adsorptive column having a high cobalt trapping capacity is highly radioactive at and in the vicinity

of the solution inlet and has its radioactivity sharply decreasing toward the solution outlet. In contrast, an adsorptive column having a low cobalt trapping capacity has its radioactivity substantially saturated at both the solution inlet and the solution outlet and with little difference at these respective portions. From Fig. 2, it is apparent that the cobalt-adsorbing capacity of the mixed column is far higher than that of the activated charcoal only column and the oxine only column.

10% of oxine is impregnated onto powdered activated charcoal having a particle diameter of 25 to 38 μm and 74 to 149 μm thereby to prepare powdered oxine-impregnated activated charcoal. 20% of a powdered OH type anion exchange resin having a particle diameter of 45 to 63 μm is then admixed with this charcoal. The resultant mixture is held as a layer of thickness of 10 mm upon the surface of a cylindrical metal net of 350 mesh having a diameter of 36 mm. An aqueous solution containing 2 ppm of cobalt chloride is fed at a rate of 140 ml/min through this adsorptive layer. The relationship between the lapse of time after the start of feed of the aqueous solution of the cobalt chloride and the concentrations of the cobalt and chlorine ions in the aqueous solution flowing out of the adsorptive layer is illustrated in Fig. 3, in which

symbols □, △ and o (and the corresponding solid symbols) give a characteristics of respectively an adsorptive layer (the activated charcoal adsorptive layer) which is composed solely of the activated charcoal an adsorptive layer (the oxine adsorptive layer) which is composed solely of the 10% oxine-impregnated activated charcoal and an adsorptive layer (the mixed adsorptive layer) which contains the powdered oxine-impregnated activated charcoal and the powdered OH type anion exchange resin. The respective solid symbols give the concentrations of the cobalt ions whereas the respective open symbols give the concentrations of the chlorine ions. Fig. 3 shows that the mixed adsorptive layer adsorbs the cobalt ions best. The chlorine ions are completely removed by the mixed adsorptive layer. The anions which could not be removed by the oxine-impregnated activated charcoal can be completely eliminated by adding the anion exchange resin in this.

By mixing the anion exchange resin, moreover, the disposal, i.e. the incineration, of the oxine-impregnated activated charcoal which is contaminated by radioactive substances can be facilitated. This is illustrated in Fig. 4, in which solid lines, broken lines and single-dotted lines illustrate the characteristics of the respectively activated charcoal, the 10% oxine-impregnated activated charcoal, and the mixed substance prepared by admixing 10% of the OH type anion exchange resin with the 10% oxine-impregnated activated charcoal. Numerals I and II indicate graphs illustrating the weight and the differential heat, respectively. A, B and C indicate start of combustion, maximum exothermic stage and end of combustion. The incineration of the mixed substance can be performed at a temperature below 750°C and lower than the incinerating temperatures of the remaining two substances. The weight of the mixed substance after incineration is substantially the same as that of the other substances, notwithstanding that it was mixed with the anion exchange resin. The volume reduction ratio of the radioactive waste can be remarkably increased by incinerating the mixed substance.

A preferred embodiment of the apparatus of the invention will now be described with reference to Fig. 5. In a boiling water reactor, the steam generated in the pressure vessel 1 thereof is fed to a turbine 2 and is then condensed into cooling water by a condenser 3. The cooling water thus prepared by the condensation is returned via a first purifier 4, a second purifier 5 and a feed-water heater 6 to the pressure vessel 1. The cooling water in the reactor

pressure vessel 1 is fed by a recirculation pump 7 via a recirculation conduit 8 to the core of the reactor pressure vessel 1. The cooling water flowing through the recirculation conduit 8 flows into the conduit of the purifying system of the reactor and is fed to a purifier 12 after it has been cooled by a regenerative heat exchanger 10 and a non-regenerative heat exchanger 11. The cooling water discharged from the purifier 12 is heated by the regenerative heat exchanger 10 and is then returned to the reactor pressure vessel 1 by way of a feed-water conduit 13. The second purifier 5 has its vessel charged with granulated cation and anion exchange resins.

The construction of the first purifier 4 will now be described in detail with reference to Fig. 6. A plurality of adsorbers 16 are attached to a supporting plate 15 which is disposed in a vessel 14. In each adsorber 16, there is, on the surface of a cylindrical metal net 17 of stainless steel, an adsorptive layer or coating 18 which consists of powdered oxine-impregnated activated charcoal and a powdered OH type anion exchange resin. In the adsorptive layer 18 is, as is better seen from Fig. 7, the activated charcoal 21 and the resin 22 are mixed. The thickness of the adsorptive layer 18 is about 10 mm. The construction of the purifier 12 is the same as that of the first purifier 4.

The cooling water flows through the feed-water conduit 13 into the space 19 of the vessel 14 and passes from the surface into the inside of the adsorptive layer 18 until it flows into the cylindrical metal net 17. Then, the cooling water flows down in the cylindrical net 17 to reach a space 20 whence it flows out into the feed-water conduit 13 at the down-stream side. The cobalt ions in the cooling water react with the oxine on the surface of the charcoal 21, while passing through the adsorptive layer 18, in accordance with reactions (1) and (2) so that they are adsorbed by the charcoal 21. The chlorine ions generated by reactions (1) and (2) are adsorbed by the anion exchange resin 22. As a result, the pH value of the cooling water in the adsorptive layer 18 is kept equal to or higher than 7 so that the adsorptivity of the charcoal 21 can be maintained at a high level. The purifier 12 can maintain a high adsorptivity in a similar way. The second purifier 5 prevents any brine, if a brine leak takes place in the condenser 3, from flowing into the pressure vessel 1 of the reactor.

If the adsorptivities of the first purifier 4 and the purifier 12 deteriorate, they are washed back to separate the adsorptive layers 18 from the surfaces of the cylindrical nets 17. The powdered oxine-impregnated activated charcoal and the powdered OH type anion

exchange resin thus separated are incinerated while mixed. The radioactive waste has its volume remarkably reduced by the incineration. In a nuclear reactor such as a boiling water reactor, it is desirable to use the OH type anion exchange resin, which is free from any liberation of a noxious substance even during ion exchange as the substance for adsorbing anions.

The anion exchange resin need not coexist spatially with the oxine-impregnated activated resin as in the embodiment described. Specifically, the cylindrical metal net 17 may have its outer circumference coated with a layer of the powdered oxine-impregnated activated charcoal 21 which in turn is surrounded by a layer of the powdered OH type anion exchange resin 22. With this construction, the chlorine ions or the like in the cooling water can be removed in advance so that the pH value in the cooling water fed to the charcoal layer can be increased to prevent the reduction in the pH value in the charcoal as a result of the reactions (1) and (2). In this instance, the chlorine ions generated in accordance with reactions (1) and (2) can be removed by the second purifier 5. If the oxine-impregnated activated charcoal and the anion exchange resin are mixed, the chlorine ions generated in accordance with reactions (1) and (2) can be substantially

removed by the anion exchange resin of the first purifier 4. As a result, the lifetime of the second purifier 5 can be increased. If the arrangement of the aforementioned two layers is reversed, i.e. if the powdered oxine-impregnated activated charcoal layer is positioned upstream of the powdered OH type anion exchange resin layer with respect to the flow of the cooling water, the reduction in the pH value caused by the adsorption reactions (according to reactions (1) and (2)) of the charcoal cannot be prevented so that the adsorptivity of the charcoal deteriorates. It is, therefore, necessary to arrange the ion exchange resin upstream of the cooling water outlet of the adsorptive layer containing the charcoal. The anion exchange resin layer may be arranged at a distance from the activated charcoal layer if it is located upstream of the latter. In this case, however, it may be necessary to mix the respective radioactive substances when they are incinerated.

If, the granulated oxine-impregnated activated charcoal and the granulated OH type anion exchange resin are used mixed together, it is sufficient to pile these two substances in the vessel of the first purifier 4.

The present invention can be applied to the purification of cooling water and to the radioactive

waste handling facilities in a nuclear reactor other than the boiling water reactor or a nuclear fuel reprocessing plant. The present invention can also be applied the purification of liquids in other industries. As the anion exchange substances, the hydroxides of magnesium, zinc, antimony, bismuth and so on can be used in addition to the anion exchange resin.

To summarise, by the present invention, the pH value of the liquid being treated with the oxine-impregnated activated charcoal, can be prevented from becoming low without the addition of alkaline solution, and the adsorptivity of the oxine-impregnated activated charcoal can be excellently maintained.

CLAIMS:

1. A method of purifying liquid comprising passing the liquid through oxine-impregnated activated charcoal characterized by:

passing the liquid also through an anion exchange material.

2. A method according to claim 1, wherein the liquid is passed through said oxine-impregnated activated charcoal and said anion exchange material so as to contact them substantially simultaneously.

3. A method according to claim 1 wherein the liquid passes through at least part of said anion exchange material before the completion of its passage through said oxine-impregnated activated charcoal.

4. A method according to any one of claims 1, 2 and 3 wherein said anion exchange material is anion exchange resin.

5. A method according to claim 4 wherein said oxine-impregnated activated charcoal and said anion exchange resin are admixed and are coated on a filter.

6. Apparatus for purifying liquid comprising at least one adsorption layer (21) containing oxine-impregnated activated charcoal, support means (17) for said layer and means (13,14) for supplying a liquid

to be treated to said adsorption layer, characterized by a layer (22) of anion exchange material located upstream, in the flow path of the liquid, of the liquid outlet from said layer (21) of oxine-impregnated activated charcoal.

7. Apparatus according to claim 6 wherein said support means (17) comprises a filter having a plurality fine holes, and said adsorption layer (21) is disposed on said filter.

8. Apparatus according to claim 6 or claim 7 wherein said anion exchange material is present in said adsorption layer containing the oxine-impregnated activated charcoal.

9. Apparatus according to any one of claims 6 to 8 wherein said anion exchange material is an anion exchange resin.

10. Apparatus according to any one of claims 6 to 9 wherein said supply means (13,14) communicates with a radioactive substance handling apparatus so that at least one of a coolant used therein and a waste liquid discharged therefrom is supplied to said adsorption layer.

FIG. 1

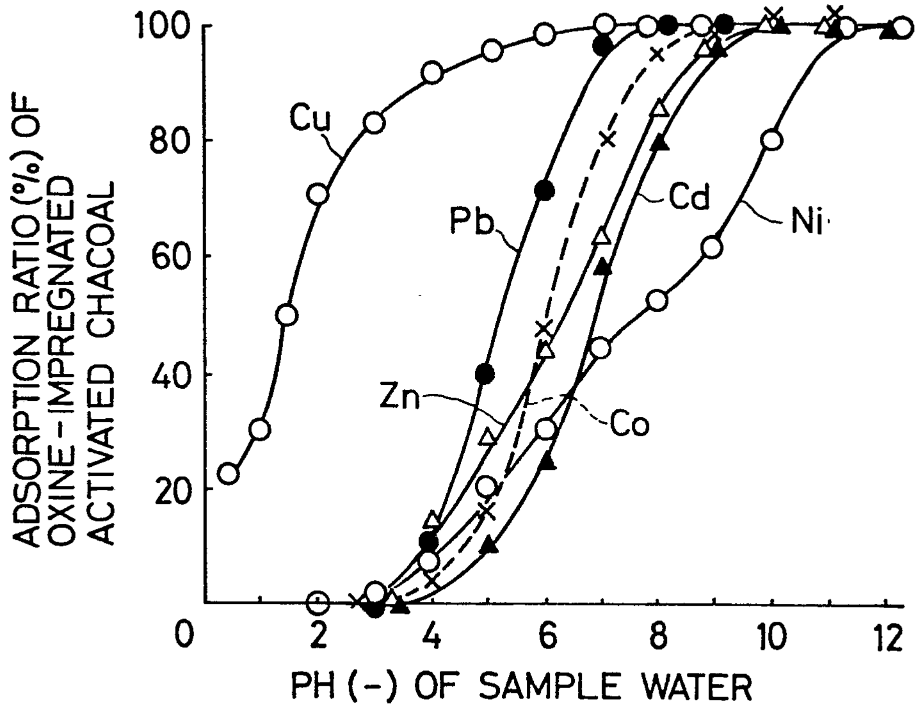
ADSORPTION RATIO (%) OF OXINE-IMPREGNATED ACTIVATED CHACOAL
100
80
60
40
20
0
2
4
6
8
10
12
PH (-) OF SAMPLE WATER
Cu
Pb
Cd
Ni
Zn
Co

FIG. 2

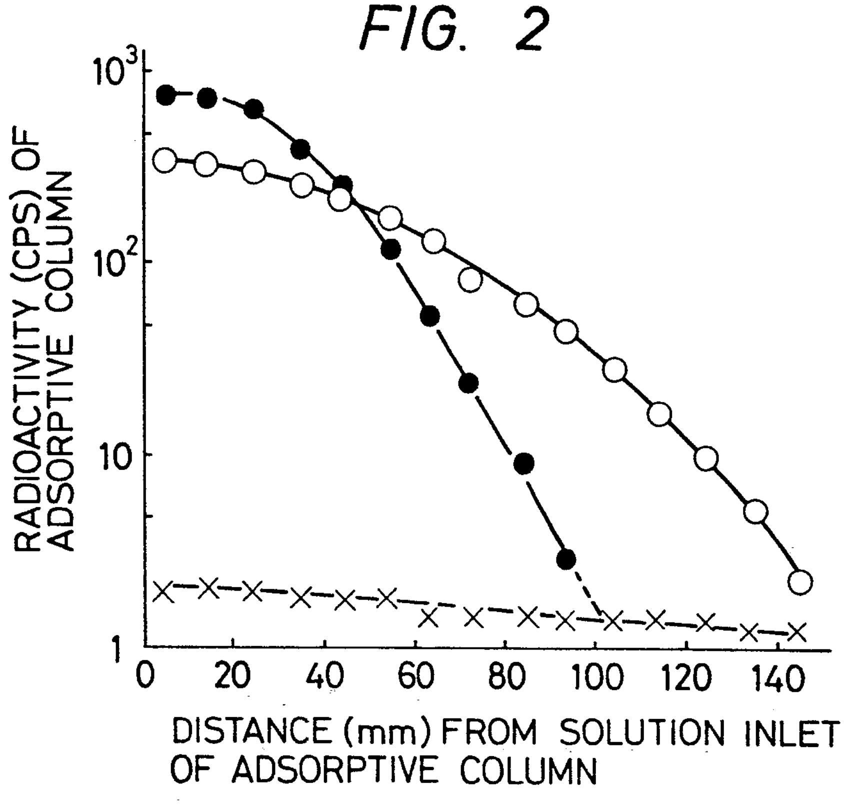
RADIOACTIVITY (CPS) OF ADSORPTIVE COLUMN
$10^3$
$10^2$
10
1
0
20
40
60
80
100
120
140
DISTANCE (mm) FROM SOLUTION INLET OF ADSORPTIVE COLUMN

FIG. 3

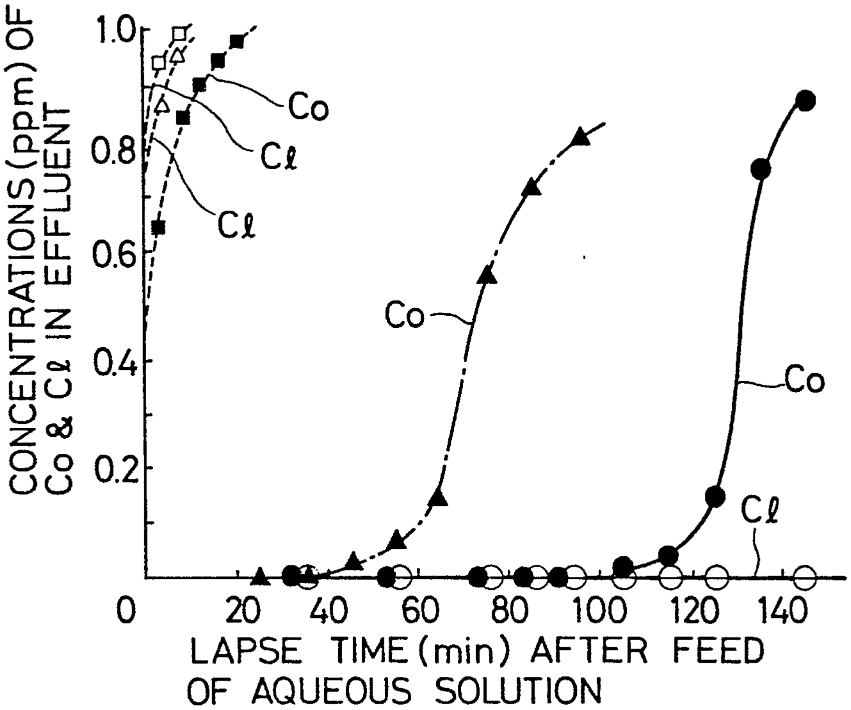
CONCENTRATIONS (ppm) OF Co & Cℓ IN EFFLUENT
1.0
0.8
0.6
0.4
0.2
0
20
40
60
80
100
120
140
Co
Cℓ
Cℓ
Co
Co
Cℓ
LAPSE TIME (min) AFTER FEED OF AQUEOUS SOLUTION

FIG. 4

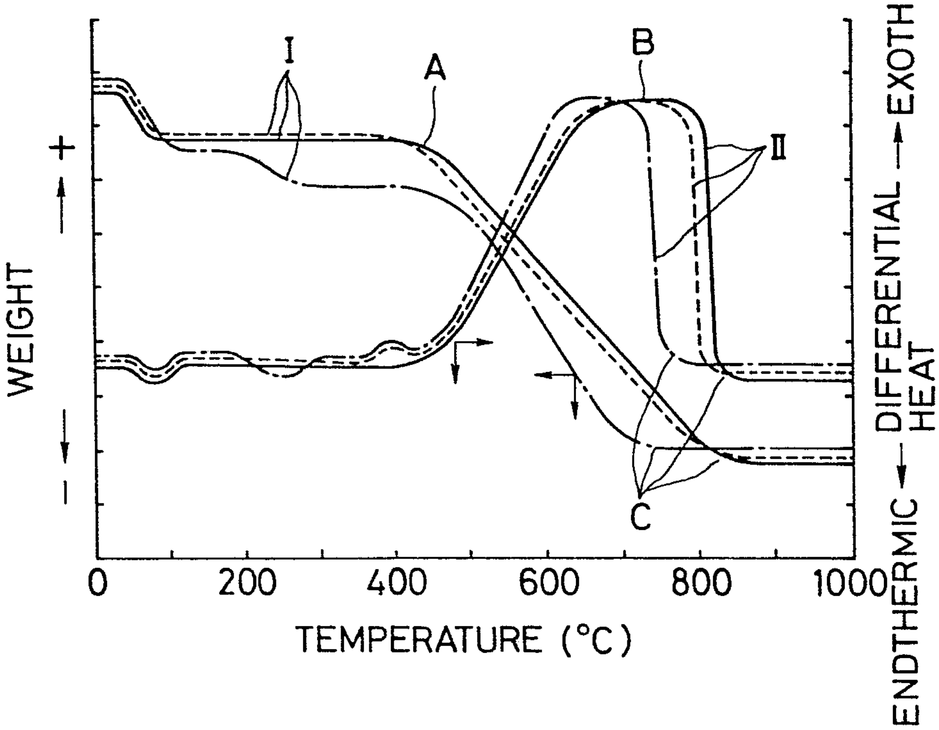
I
A
B
II
C
WEIGHT
+
-
0
200
400
600
800
1000
TEMPERATURE (°C)
ENDTHERMIC ← DIFFERENTIAL HEAT → EXOTHERMIC

FIG. 5

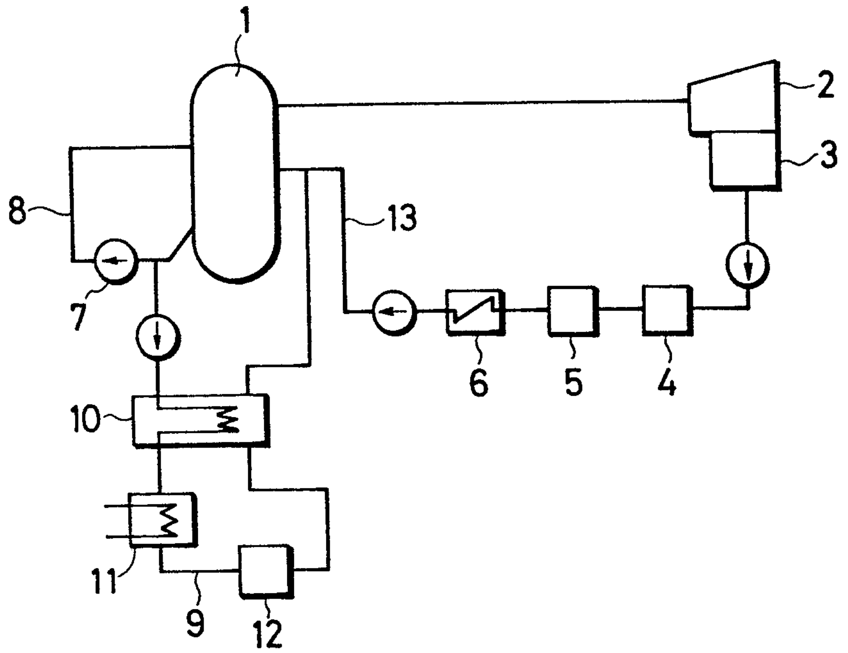


FIG. 6

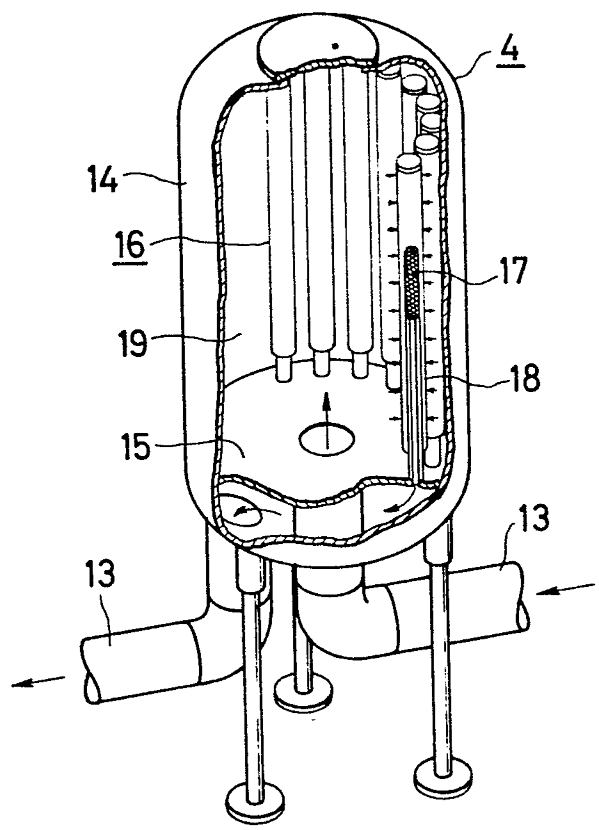


FIG. 7

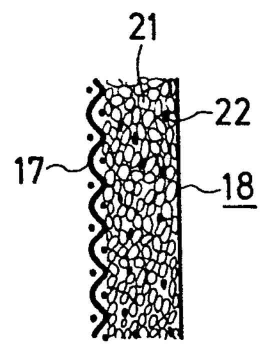

European Patent Office

# EUROPEAN SEARCH REPORT

0059623

Application number

EP 82 30 1001

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | FR-A-2 080 451 (OSAKA SODA) *Page 9, line 6; page 10, lines 4-27; page 12, lines 17 - page 13, line 2; page 34, claims 1-4* & GB - A - 1 336 241 | 1,4,6 | G 21 F 9/06<br>G 21 C 19/30<br>B 01 J 47/12<br>C 02 F 1/28 |
| A | GB-A- 831 745 (LITTLE) *Page 1, line 70 - page 2, line 9; page 2, line 61* | 1 | |
| A | CH-A- 460 814 (MULLER) | | |
| A | FR-A-1 575 843 (UNION TANK CAR) & US - A - 3 520 805 | | |
| D,A | JP-A-54 023 093 (MOTOJIMA) | | **TECHNICAL FIELDS SEARCHED (Int. Cl. 3)** |
| E | EP-A-0 047 978 (HITACHI) *Page 11; claims* | 1,10 | G 21 F<br>G 21 C<br>B 01 J<br>C 02 F |

The present search report has been drawn up for all claims

| Place of search | Date of completion of the search | Examiner |
|---|---|---|
| THE HAGUE | 01-06-1982 | WENDLING J.P. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document